# EUROPÄISCHE PATENTSCHRIFT

(11) **EP 2 834 319 B1**
(45) Veröffentlichungstag und Bekanntmachung des Hinweises auf die Patenterteilung: **20.01.2016**
(21) Anmeldenummer: 13712794.0
(22) Anmeldetag: 27.03.2013
(51) Int. Cl.: C09K 8/528, E21B 37/06

(54) **VERFAHREN ZUM LÖSEN VON ERDALKALIMETALLSULFATE UMFASSENDEN ABLAGERUNGEN**
METHOD FOR LOOSENING DEPOSITS CONTAINING ALKALINE EARTH METAL SULPHATES
PROCÉDÉ D'ENLÈVEMENT DE DÉPÔTS CONTENANT DES SULFATES MÉTALLIQUES ALCALINO-TERREUX

(30) Priorität: 03.04.2012 US 201261619445 P; 03.04.2012 EP 12162980
(43) Veröffentlichungstag der Anmeldung: 11.02.2015
(73) Patentinhaber: BASF SE, 67056 Ludwigshafen (DE); Wintershall Holding GmbH, 34119 Kassel (DE)
(72) Erfinder: BERTKAU, Walter, 67069 Ludwigshafen (DE); HATSCHER, Stephan, NL-2261 CG Leidschendam (NL); FRENZEL, Stefan, 73054 Eislingen (DE); OSSMER, Uwe, 67434 Neustadt (DE)
(86) Internationale Anmeldenummer: PCT/EP2013/056616
(87) Internationale Veröffentlichungsnummer: WO 2013/149923

(56) Entgegenhaltungen:
- WO-A1-2006/092438
- WO-A2-2007/018922
- US-A- 4 215 000
- US-A1- 2010 323 933

## Beschreibung

Die vorliegende Erfindung betrifft ein Verfahren zum Lösen von Erdalkalimetallsulfate umfassenden Ablagerungen in unterirdischen Anlagen oder Anlagenteilen zur Förderung von Erdöl, Erdgas und/oder Wasser, indem man die Ablagerungen mit einer wässrigen, Methansulfonsäure enthaltenden Formulierung behandelt.

Im Zuge der Erdöl- und/oder Erdgasförderung können sich in der Erdölformation selbst, in unterirdischen Anlagenteilen, wie beispielsweise dem mit Metallrohren ausgekleideten Bohrloch, sowie in überirdischen Anlagenteilen wie beispielsweise Separatoren, feste Ablagerungen anorganischer oder organischer Stoffe bilden. Die Bildung derartiger Ablagerungen ist äußerst unerwünscht, weil sie die Förderung von Erdöl zumindest behindern und im Extremfalle zu einer vollständigen Verstopfung der betroffenen Anlagenteile führen können.

Im Zuge der Erdöl- oder Erdgasförderung wird üblicherweise nicht nur Erdöl- und/oder Erdgas gefördert, sondern auch mehr oder weniger stark salzhaltiges Wasser. Es kann sich hierbei um in der Formation enthaltenes Wasser oder um kondensiertes Wasser handeln, oder auch um Wasser, welches man über eine Injektionsbohrung zur Aufrechterhaltung des Drucks in die unterirdische Formation injiziert hat. Salzhaltiges Wasser kann auch bei der geothermischen Energiegewinnung, bei der man hydrothermales Wasser fördert, gefördert werden, bei der man durch eine Injektionsbohrung kaltes Wasser in eine Gesteinsformation injiziert und durch eine Förderbohrung warmes Wasser entnimmt.

Ablagerungen schwerlöslicher anorganischer Salze wie beispielsweise Ablagerungen von Calciumcarbonat oder Calcium-, Strontium- oder Bariumsulfat können sich bilden, weil in der Gesteinsformation unter den natürlich gegebenen Bedingungen (hoher Druck, hohe Temperatur) eine höhere Konzentration der Salze im Formationswasser gelöst werden kann als unter Normalbedingungen (1 bar, Raumtemperatur). Gelangt mit anorganischen Salzen gesättigtes Formationswasser auf dem Weg zur Erdoberfläche in Zonen mit niedriger Temperatur und/oder niedrigerem Druck, so können schwerlösliche Salze ausfallen, z.B. noch in der Formation selbst, auf der inneren Oberfläche der metallischen Auskleidung der Förderbohrung oder auch erst in oberirdischen Anlagenteilen wie Pipelines oder Separatoren. Weiterhin können Ablagerungen gebildet werden, indem sich miteinander inkompatible Wässer, beispielsweise injiziertes Wasser und Formationswasser miteinander vermischen und dabei Feststoffe ausfallen.

Oberirdische Anlagenteile sind vergleichsweise leicht zugänglich, und können prinzipiell mechanisch gereinigt werden. Daher bereitet die Reinigung derartiger Anlagenteile im Allgemeinen keine Schwierigkeiten.

Die Reinigung von Verunreinigungen in unterirdischen Anlagenteilen, insbesondere im Bohrloch selbst oder im Reservoirgestein bereitet größere Schwierigkeiten.

Während carbonatische Ablagerungen im Bohrloch oder im Reservoirgestein vergleichsweise einfach unter Verwendung von Säuren wie beispielsweise HCl gelöst werden können, bereitet das Entfernen sulfatsicher Ablagerungen, insbesondere von Calcium-, Strontium und Bariumsulfat große Probleme, weil diese in HCl kaum löslich sind.

So sind Vorrichtungen bekannt, die in das Bohrloch eingelassen werden können und Ablagerungen detektieren und entfernen können, beispielsweise unter Verwendung von Ultraschalltechniken wie von US 6,886,406 offenbart. Derartige Techniken sind aber vergleichweise aufwendig.

Weiterhin ist es bekannt, Verunreinigungen im Bohrloch unter Verwendung bestimmter Formulierungen zu lösen.

US 2,877,848 offenbart die Verwendung des Komplexbildners EDTA bzw. Salzen davon zum Lösen von Ablagerungen wie BaSO₄ im Bohrloch. Optional können der Formulierung nichtionische Tenside zugesetzt werden.

US 4,980,077 offenbart ein Verfahren zum Lösen von Ablagerungen aus Erdalkalimetallsulfaten mit Polyaminocarboxylaten als Komplexbildnern in einer Konzentration von 0,1 bis 1 mol/l bei einem pH-Wert von 8 bis 14. Bei dem Komplexbildner kann es sich um EDTA oder um DTPA handeln. Die Formulierung umfasst weiterhin Oxalat-Ionen in einer Konzentraton von 0,1 bis 1 mol/l.

US 5,282,995 offenbart ein Verfahren zum Lösen von Ablagerungen aus Erdalkalimetallsulfaten mit Polyaminocarboxylaten wie EDTA oder DTPA in alkalischem Medium. Die Formulierung umfasst weiterhin Formiat-Ionen.

US 5,548,860 offenbart ein Verfahren zum Lösen von Ablagerungen aus Erdalkalimetallsulfaten mit Polyaminocarboxylaten wie EDTA oder DTPA in alkalischem Medium. Die Formulierung umfasst weiterhin einen Synergisten ausgewählt aus der Gruppe von Oxalat-, Thiosulfat-, Salicylat- oder Nitriloacetat-Anionen. Das Ablösen wird durch Ultraschall unterstützt.

Die Verwendung von alkalischen Lösungen von Komplexbildnern wie EDTA oder DTPA ist jedoch mit einer Reihe von Nachteilen verbunden.

Erdalkalimetallionen wie Mg²⁺, Ca²⁺, Sr²⁺ und/oder Ba²⁺ sowie HCO₃⁻ enthaltendes Lagerstättenwasser weist einen niedrigen pH-Wert auf. Injiziert man eine alkalische Lösung von Komplexbildnern in ein Bohrloch, so vermischt sich zumindest ein Teil der alkalischen Lösung mit dem Lagerstättenwasser. Hierbei kommt es zu Sekundärausfällungen, beispielsweise von Mg(OH)₂, Ca(OH)₂ oder CaCO₃, welche die Formation und/oder das Bohrloch verstopfen können. Weiterhin ist die Effizient niedrig: Der Komplexbildner komplexiert zunächst die in der Lösung vorhandenen Erdalkalimetallionen und greift die Ablagerungen zunächst nicht an.

Es müssen daher Maßnahmen ergriffen werden, um zu verhindern, dass sich Lagerstättenwasser und die alkalische Lösung des Komplexbildners miteinander vermischen. Hierzu kann man beispielsweise das Bohrloch in einem vorgelagerten Schritt mit einer Spülflüssigkeit spülen und/oder man kann das Bohrloch absperren, damit kein Lagerstätttenwasser mehr in das Bohrloch dringen kann. Dies kann beispielsweise mechanisch mittels eines Einsatzes erfolgen, der die Perforierungen der Bohrlochauskleidung verschließt. Derartige Maßnahmen bedeuten naturgemäß zusätzlichen Aufwand.

WO 2006/092438 A1 offenbart die Verwendung von wasserlöslichen Alkansulfonsäuren zur Erhöhung der Permeabilität von unterirdischen, carbonatischen erdöl- oder erdgasführenden Gesteinsformationen und zum Lösen von carbonatischen und/oder carbonathaltigen Verunreinigungen bei der Erdölförderung. Das Lösen sulfathaltiger Ablagerungen ist nicht beschrieben.

Die ältere Anmeldung WO 2012/142396 A1 offenbart ein Verfahren zum Lösen von Ablagerungen von Oberflächen mit einer wässrigen Formulierung umfassend 3 bis 15 Gew. % mindestens eines Komplexbildners ausgewählt aus der Gruppe von MGDA, NTA, HEDTA, GLDA, EDTA oder DTPA sowie 3 bis 15 Gew. % mindestens einer Säure. Bei der Säure kann es sich beispielsweise um Methansulfonsäure handeln. Der pH-Wert der Formulierung liegt bei 3 bis 9. Bei den Ablagerungen kann es sich beispielsweise um CaCO₃ oder CaSO₄ handeln. Bei den Oberflächen, welche von Ablagerungen befreit werden sollen, kann es sich beispielsweise um die Oberflächen von Turbinen, Schiffshüllen, Sonnenkollektoren, osmotischen Membranen, Heizelementen, Reaktoren, Erdlöllagerstätten, Wasserbohrungen, Geothermiebohrungen oder Erdölbohrungen handeln.

Aufgabe der Erfindung war es, ein verbessertes Verfahren zur Beseitigung von Ablagerungen von Erdalkalimetallsulfaten in unterirdischen Anlagen bzw. Anlagenteilen zur Förderung von Erdöl, Erdgas oder Wasser zur Verfügung zu stellen, welches nicht den Nachteil aufweist, Sekundärablagerungen zu verursachen.

Verfahren zum Lösen von Erdalkalimetallsulfate umfassenden Ablagerungen in unterirdischen Anlagen bzw. Anlagenteilen zur Förderung von Erdöl und/oder Erdgas und/oder Wasser aus unterirdischen Formationen, indem man eine wässrige Formulierung zum Lösen der Ablagerungen in die unterirdischen Anlagen eindrückt und auf die Ablagerungen einwirken lässt, wobei die wässrige Formulierung mindestens
(I) 15 Gew. % bis 98,98 Gew.-% Wasser,
(II) 1 Gew. % bis 75 Gew.-% Methansulfonsäure,
(III) 0,01 Gew. % bis 5 Gew.-% mindestens mit Wasser mischbaren organischen Lösemittels sowie
(IV) 0,01 Gew. % bis 5 Gew.-% mindestens eines Korrosionsinhibitors umfasst,
   und wobei der pH-Wert der eingesetzten Formulierung ≤ 2,5 ist und die Summe der Komponenten (I), (II), (III) und (IV) mindestens 80 Gew. % bezüglich der Summe aller Bestandteile beträgt.

In einer bevorzugten Ausführungsform des Verfahrens handelt es sich bei den unterirdischen Anlagen um ein Bohrloch oder das Reservoirgestein, besonders bevorzugt um das Bohrloch.

In einer ebenfalls bevorzugten Ausführungsform des Verfahrens umfasst die unterirdische Formation Formationswasser mit darin gelösten Ionen ausgewählt aus der Gruppe von Mg²⁺, Ca²⁺, Sr²⁺ und Ba²⁺, und die Anlagen bzw. Anlagenteile stehen während der Ausführung des Verfahrens in Kontakt mit dem Formationswasser.

Zu der Erfindung ist im Einzelnen das Folgende auszuführen:
Zur Ausführung des erfindungsgemäßen Verfahrens wird eine wässrige Formulierung eingesetzt, welche mindestens die Komponenten (I), (II), (III) und (IV) umfasst. Neben den Komponenten (I) bis (IV) kann die verwendete Formulierung optional noch weitere Komponenten umfassen.

Als Komponente (I) umfasst die Formulierung Wasser.

Als Komponente (II) umfasst die Formulierung Methansulfonsäure. Methansulfonsäure ist kommerziell erhältlich, beispielsweise in Reinform oder als ca. 70 Gew.-%ige wässrige Lösung.

Als Komponente (III) umfasst die mindestens ein mit Wasser mischbares, organisches Lösemittel. Die zu lösenden Ablagerungen in den Anlagen bzw. Anlagenteilen sind üblicherweise mit Öl benetzt, welches eine schnelle Auflösung der Ablagerungen behindert. Organische Lösemittel ermöglichen daher eine schnellere Ablösung. Die eingesetzten Lösemittel können ganz oder auch nur teilweise mit Wasser mischbar sein. Mindestbedingung ist, dass bei der eingesetzten Konzentration und unter den Einsatzbedingungen keine Phasentrennung von Wasser und organischem Lösemittel auftritt.

Beispiele für geeignete organische Lösemittel umfassen Alkohole wie Ethanol, n-Propnanol, i-Propanol, n-Butanol, i-Butanol, Glykole wie Ethylenglykol, Diethylenglykol, propylenglykol oder Glykolether wie beispielsweise Ethylenglykolmonobutylether. Selbstverständlich können auch Gemische mehrerer verschiedener wassermischbarer, organischer Lösemittel eingesetzt werden.

Als Komponente (IV) umfasst die Formulierung mindestens einen Korrosionsinhibitor. Beispiele geeigneter Korrosionsinhinitoren umfassen Polyetherphospahte, Butindiol, Butindiolalkoxylate oder Alkylphosphate. Selbstverständlich können auch Gemische mehrerer verschiedener Korrosionsinhibitoren eingesetzt werden.

Erfindungsgemäß beträgt der pH-Wert der eingesetzten Formulierung ≤ 2,5, bevorzugt ≤ 2, und besonders bevorzugt ≤ 1. Der pH-Wert kann vom Fachmann in prinzipiell bekannter Art und Weise leicht durch die Konzentration der Methansulfonsäure eingestellt werden.

Beispiele weiterer -optional vorhandener- Komponenten der Formulierungen umfassen weitere Säuren neben der Methansulfonsäure, wie beispielsweise Salzsäure, Flusssäure, Ameisensäure oder Essigsäure oder Tenside. Komplexbildner können in Sonderfällen als weitere Komponenten in geringen Mengen vorhanden sein, sind aber bevorzugt nicht vorhanden.

Erfindungsgemäß umfasst die Formulierung die Komponenten (I) bis (IV) in den folgenden Mengen(alle Angaben in Gew.-%):

| | |
|---|---|
| (I) Wasser | 15-98,98 |
| (II) Methansulfonsäure | 1-75 |
| (III) Organische Lösemittel | 0,01-5 |
| (IV) Korrosionsinhibitoren | 0,01-5 |

Bevorzugt können die folgenden Mengen eingesetzt werden (alle Angaben in Gew.-%):

| | bevorzugt | besonders bevorzugt | ganz besonders bevorzugt |
|---|---|---|---|
| (I) Wasser | 44-94,8 | 56-89,6 | 66-83,6 |
| (II) Methansulfonsäure | 5-50 | 10-40 | 16-30 |
| (III) Organische Lösemittel | 0,1-3 | 0,2-2 | 0,2-2 |
| (IV) Korrosionsinhibitoren | 0,1-3 | 0,2-2 | 0,2-2 |

Erfindungsgemäß beträgt die Summe der Komponenten (I), (II), (III) und (IV) mindestens 80 Gew. % bezüglich der Summe aller Bestandteile, bevorzugt mindestens 90 Gew. %, besonders bevorzugt mindestens 95 Gew. % und ganz besonders bevorzugt 100 Gew. %, d.h. außer den Komponenten (I) bis (IV) sind keine weiteren Komponenten in der Formulierung vorhanden. Sofern weitere Komponenten überhaupt vorhanden sind, sollte deren Menge weiterhin in der Regel nicht 50 Gew.-%, bevorzugt 25 Gew. % und besonders bevorzugt 10 Gew. % der Menge der Komponenten (II), (III) und (IV) übersteigen.

Im erfindungsgemäßen Verfahren wird die Formulierung zum Lösen von Erdalkalimetallsulfate umfassenden Ablagerungen in unterirdischen Anlagen bzw. Anlagenteilen zur Förderung von Erdöl und/oder Erdgas und/oder Wasser aus unterirdischen Formationen eingesetzt.

Bei den unterirdischen Formationen kann es sich um unterirdische Erdöl- und/oder Erdgaslagerstätten handeln, wobei die Erdöl- bzw. Gaslagerstätten neben Erdöl und/oder Erdgas mehr oder weniger stark salzhaltiges Formationswasser umfassen. Das Lagerstättenwasser kann natürlichen Ursprungs sein, oder es kann sich auch um Wasser handeln, welches in die Formation injiziert wurde. Zum Injizieren in Formationen kann Süßwasser oder auch Salzwasser verwendet werden. Beispielsweise kann es sich bei Salzwasser um Seewasser handeln oder auch um gefördertes Lagerstättenwasser, welches wieder injiziert wird.

Das Formationswasser kann insbesondere Alkalimetallionen und Erdalkalimetallionen sowie als Anionen Halogenidionen, insbesondere Chloridionen sowie andere Ionen wie Sulfationen handeln. Insbesondere handelt es sich um Formationswasser, welches gelöste Erdalkalimetallionen, insbesondere solche ausgewählt aus der Gruppe von Mg²⁺, Ca²⁺, Sr²⁺ und Ba²⁺ sowie weiterhin gelöstes SO₄²⁻ umfasst.

Weiterhin kann es sich auch um Formationen handeln, aus denen ausschließlich Wasser gefördert wird. Bei dem Wasser kann es sich um natürliches Wasser in der Formation handeln, oder um Wasser, welches in die Formation injiziert wurde, beispielsweise zur geothermischen Energiegewinnung.

Bei den unterirdischen Anlagen- bzw. Anlagenteilen handelt es sich um solche unterirdisch angeordneten Anlagenteile, welche die unterirdische Formation hydraulisch mit der Erdoberfläche verbinden, d.h. um Anlagen bzw. Anlagenteile, die einen Fließweg für Erdöl, Erdgas und Wasser von der Formation an die Erdoberfläche gewährleisten. Insbesondere handelt es sich hierbei um Bohrlöcher einschließlich üblicher Einbauten von Bohrlöchern, wie beispielsweise die Bohrlochwandung aus Stahlrohren, Förderstränge, tail-pipes sowie deren Ausstattungen oder Pumpenelementen wie beispielsweise Rotoren, Statoren oder Pumpengestänge. Es kann sich auch um Reservoirgestein, insbesondere das das Bohrloch umgebende Reservoirgestein. Besonders bevorzugt handelt es sich um Bohrlöcher, insbesondere mit Stahlrohren ausgekleidete Bohrlöcher.

Bei den Ablagerungen kann es sich um alle Arten von Erdalkalimetallsulfaten umfassenden Ablagerungen handeln. Beispiele umfassen CaSO₄, CaSO₄* ½ H₂O, CaSO₄* 2 H₂O, SrSO₄ oder BaSO₄.

Neben den Erdalkalimetallsulfaten können die Ablagerungen noch andere Komponenten enthalten. Zu nennen sind hier einerseits carbonatische Ablagerungen, wie CaCO₃ und/oder MgCO₃-Ablagerungen. Zum anderen können die Ablagerungen mit Ölen und/oder Ölbestandteilen wie Paraffinen, Asphaltenen oder Napthenaten oder mit Rückständen von Korrosionsinhibitoren verunreinigt sein.

Die Ablagerungen können sich an den inneren Wandungen der Anlagen bzw. Anlagenteile befinden, beispielsweise auf der Innenwandung von Bohrlöchern. Sie können aber beispielsweise auch Löcher ganz oder teilweise zugesetzt haben, beispielsweise die Perforation des Bohrlochs an der hydraulischen Verbindung zur Formation. Ablagerungen können sich auch innerhalb der Formation im Nahbereich um das Bohrloch befinden. Derartige Ablagerungen verhindern den Transport der Kohlenwasserstoffe zum Bohrloch.

Das erfindungemäße Verfahren wird ausgeübt, indem man die oben beschriebene Formulierung in die unterirdischen Anlagen bzw. Anlagenteile, insbesondere in das Bohrloch sowie optional in das Reservoirgestein eindrückt und auf die Ablagerungen einwirken lässt. Dies kann mittels üblicher Pumpen erfolgen, und der Druck wird vom Fachmann je nach den Verhältnissen gewählt. Mittels des Drucks kann der Fachmann beeinflussen, wie weit die Formulierung in die Anlagen bzw. Anlagenteile oder gegebenenfalls durch die Perforation in die Formation eindringen kann.

Die Erdalkalimetallsulfate umfassenden Ablagerungen lösen sich unter dem Einfluss der wässrigen, methansulfonsäurehaltigen Formulierung. Die Einwirkzeit wird vom Fachmann je nach dem gewünschten Ergebnis bestimmt. Sie kann insbesondere 1 h bis 300 h, bevorzugt 2 h bis 200 h betragen, ohne dass die Erfindung auf diese Dauer beschränkt sein soll. Es ist denkbar, die Formulierung auf eine bestimmte Temperatur vorzuwärmen. Üblicherweise erwärmt sich die Formulierung in den Anlagen bzw. Anlagenteilen mit der Zeit auf die in diesen Anlagen oder Anlagenteilen vorherrschende Temperatur, wobei die Temperatur üblicherweise nicht gleichmäßig sein wird, sondern beispielsweise je nach Tiefe des Bohrlochs variabel ist.

In einer bevorzugten Ausführungsform der Erfindung umfasst die unterirdische Formation Formationswasser mit darin gelösten Ionen ausgewählt aus der Gruppe von Mg²⁺, Ca²⁺, Sr²⁺ und Ba²⁺, wobei die Anlagen bzw. Anlagenteile während der Ausführung des Verfahrens in Kontakt mit dem Formationswasser stehen.

In einer Ausführungsform der Erfindung kann die Anlage bzw. das Anlagenteil, beispielsweise ein Bohrloch noch Reste des Ionen ausgewählt aus der Gruppe von Mg²⁺, Ca²⁺, Sr²⁺ und Ba²⁺ enthaltenden Formationswassers enthalten. Es ist der besondere Vorteil dieser Erfindung, dass ein vorheriges Spülen des Anlage bzw. der Anlagenteile vor dem In-Kontakt-bringen mit der erfindungsgemäß zu verwendenden Formulierung nicht erforderlich ist, weil die saure Methansulfonsäureformulierung zu keinen Ausfällungen mit den genannten Ionen führt.

Weiterhin können die Anlage bzw. das Anlagenteil während der Ausführung des Verfahrens noch hydraulisch mit der Formation stehen, so dass noch Formationswasser in die Anlage oder das Anlagenteil einströmen kann und sich mit der sauren Formulierung vermischen kann. Es ist nicht erforderlich, die Anlage oder den Anlagenteil vollständig hydraulisch gegen die Formation abzuschotten.

In einer besonders bevorzugten Ausführungsform der Erfindung wird bei der Behandlung eines Bohrlochs das Bohrloch nicht gegenüber der Formation abgeschlossen, sondern die Verbindung zur Formation, beispielsweise über eine Perforation in der Bohrlochwandung bleibt offen. Bei dieser Ausführungsform kann man vorteilhaft das Einströmen von Formationswasser umfassend Ionen ausgewählt aus der Gruppe von Mg²⁺, Ca²⁺, Sr²⁺ und Ba²⁺ ins das Bohrloch zumindest teilweise durch Anlegen eines Drucks, welcher gleich oder größer ist als der Druck des Formationswassers verhindern. Bei etwa gleichem Druck wird es gleichwohl an der Kontaktstelle zu einer gewissen Vermischung von sauerer Formulierung und Formationswasser kommen. Bei einem Druck kann die saure Formulierung in die Formation einströmen, wo es ebenfalls zu einer Vermischung mit Formationswasser kommen kann. Dies hat im Gegensatz zu alkalischen Formulierungen mit Komplexbildnern aber keine Sekundärausfällungen zur Folge, welche die Formation verstopfen könnten.

Die folgenden Beispiele sollen die Erfindung näher erläutern:
In den Versuchen wurden die Fähigkeit von Salzsäure, Methansulfonsäure sowie eines Komplexbildner umfassenden kommerziellen Reinigers für Sulfatablagerungen untersucht.

Verwendete Materialien:
(A) Salzsäure, 10 Gew.%-ige Lösung in Wasser
(B) Methansulfonsäure, 20 Gew. %-ige Lösung in Wasser
(C) Kommerzieller Ablagerungslöser (SRW 85247 Baker Petrolite), enthält 30 bis 60 Gew. % des Komplexbildners Dinatriumethanoldiglycinat sowie 1 bis 5 Gew. % NaOH in wässriger Lösung, verdünnt mit Wasser auf 20 Gew. % Reiniger, pH 10
(D) Kommerzieller Ablagerungslöser wie (C), verdünnt auf 20 Gew. % mit Wasser und HCl, pH 5

### Calciumsulfat-Pulver (Afla Aesar)

### Allgemeine Versuchsvorschrift:

Jeweils 2 g des Calciumsulfat-Pulvers wurden mit jeweils 40 ml der Löser (A), (B), (C) bzw. (D) in einem mit Teflon ausgekleideten geschlossenem Stahlgefäß bei verschiedenen Temperaturen und verschiedenen Zeiten von bis zu 168 h (d.h. 1 Woche) gelagert. Nach Versuchsende und Abkühlen auf Raumtemperatur wurde jeweils der Ca-Gehalt in der Lösung analysiert. Hierzu wurde der Mischung im Stahlgefäß EDTA zugegeben, um gelöstes Ca²⁺ am Ausfallen zu hindern und es wurde über einen sehr feinen Filter (0,2 µm Filter) abfiltiert. Das Filtrat wurde zur Analyse verwendet. Es wurden Tests bei Raumtemperatur, 60°C und 90°C durchgeführt.

Die Ergebnisse sind in den Tabellen 1, 2 und 3 zusammengestellt.

Die Ergebnisse zeigen, dass der Löser (C), welcher Komplexbildner und NaOH umfasst (pH 10) ein gutes Lösevermögen für Calcium aufweist. Säuert man einen solchen Löser aber auf pH 5 an, um das Problem der Sekundärausfällungen zu vermeiden (Versuch (D)), dann zeigt dieser Löser nur eine sehr geringe Wirkung.

Salzsäure und Methansulfonsäure haben eine ähnliche Wirkung, allerdings ist die Methansulfonsäure bekanntermaßen deutlich weniger korrosiv als Methansulfonsäure.

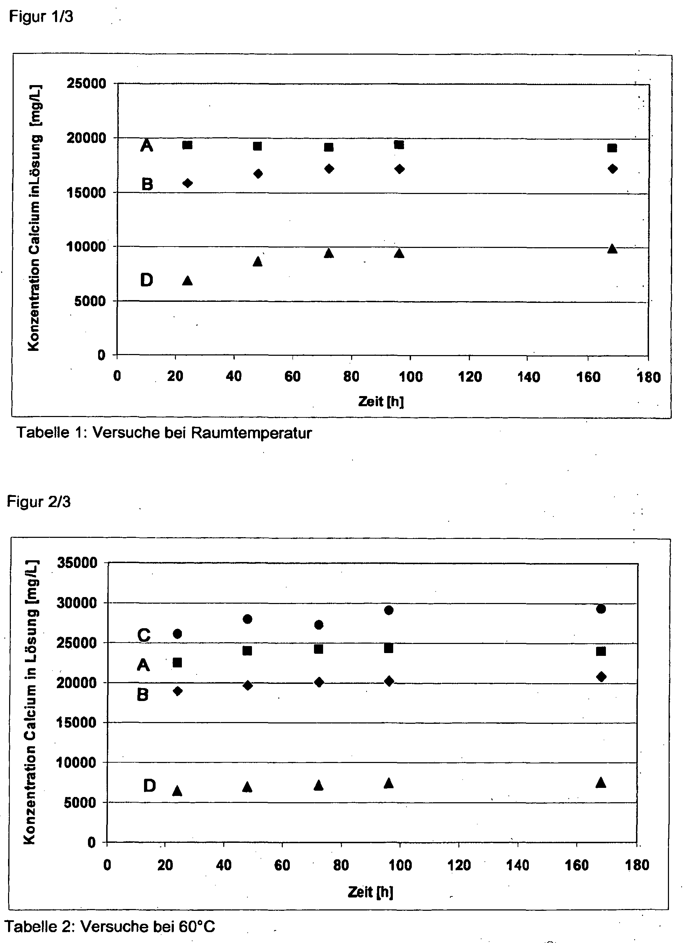

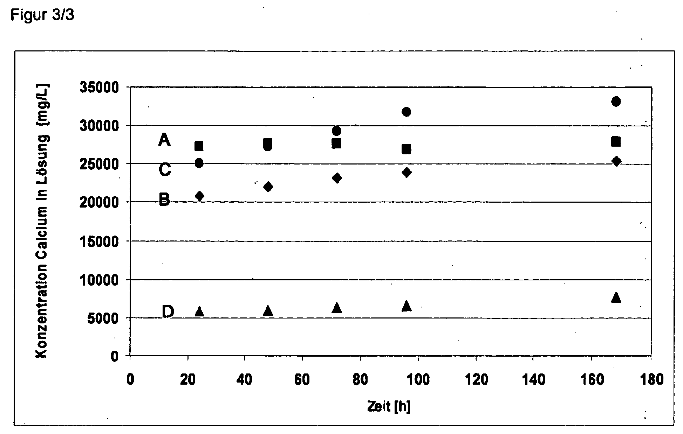

## Patentansprüche

1. Verfahren zum Lösen von Erdalkalimetallsulfate umfassenden Ablagerungen in unterirdischen Anlagen bzw. Anlagenteilen zur Förderung von Erdöl und/oder Erdgas und/oder Wasser aus unterirdischen Formationen, indem man eine wässrige Formulierung zum Lösen der Ablagerungen in die unterirdischen Anlagen eindrückt und auf die Ablagerungen einwirken lässt, **dadurch gekennzeichnet, dass** die wässrige Formulierung mindestens
(I) 15 Gew. % bis 98,98 Gew.-% Wasser,
(II) 1 Gew. % bis 75 Gew.-% Methansulfonsäure,
(III) 0,01 Gew. % bis 5 Gew.-% mindestens eines mit Wasser mischbaren, organischen Lösemittels, sowie
(IV) 0,01 Gew. % bis 5 Gew.-% mindestens eines Korrosionsinhibitors umfasst, wobei der pH-Wert der eingesetzten Formulierung ≤ 2,5 ist und die Summe der Komponenten (I), (II), (III) und (IV) mindestens 80 Gew. % bezüglich der Summe aller Bestandteile beträgt.

2. Verfahren gemäß Anspruch 1, **dadurch gekennzeichnet, dass** die Ablagerungen Calcium-, Strontium- und/oder Bariumsulfat umfassen.

3. Verfahren gemäß Anspruch 1, **dadurch gekennzeichnet, dass** es sich bei den Ablagerungen um Strontium- und/oder Bariumsulfat umfassende Ablagerungen handelt.

4. Verfahren gemäß einem der Ansprüche 1 bis 3, **dadurch gekennzeichnet, dass** die unterirdische Formation Formationswasser mit darin gelösten Ionen ausgewählt aus der Gruppe von Mg²⁺, Ca²⁺, Sr²⁺ und Ba²⁺ umfasst und die Anlagen bzw. Anlagenteile während der Ausführung des Verfahrens in Kontakt mit dem Formationswasser stehen.

5. Verfahren gemäß einem der Ansprüche 1 bis 4 **dadurch gekennzeichnet, dass** es sich bei der Anlage um ein Bohrloch und/oder das angrenzende Reservoirgestein handelt.

6. Verfahren gemäß Anspruch 5, **dadurch gekennzeichnet, dass** man das Bohrloch während der Ausführung des Verfahrens nicht gegenüber der Formation absperrt.

7. Verfahren gemäß Anspruch 6, **dadurch gekennzeichnet, dass** man das Einströmen von Formationswasser ins das Bohrloch durch Anlegen eines Drucks, welcher gleich oder größer als der Druck des Formationswassers ist verhindert.

8. Verfahren gemäß einem der Ansprüche 1 bis 7, **dadurch gekennzeichnet, dass** die wässrige Formulierung mindestens
(I) 44 Gew. % bis 94,8 Gew.-% Wasser,
(II) 5 Gew. % bis 50 Gew.-% Methansulfonsäure,
(III) 0,1 Gew. % bis 3 Gew.-% mindestens eines mit Wasser mischbaren, organischen Lösemittels sowie
(IV) 0,01 Gew. % bis 3 Gew.-% mindestens eines Korrosionsinhibitors umfasst.

9. Verfahren gemäß einem der Ansprüche 1 bis 7, **dadurch gekennzeichnet, dass** die wässrige Formulierung mindestens
(I) 66 Gew. % bis 83,6 Gew.-% Wasser,
(II) 16 Gew. % bis 30 Gew.-% Methansulfonsäure,
(III) 0,2 Gew. % bis 2 Gew.-% mindestens eines mit Wasser mischbaren, organischen Lösemittels, sowie
(IV) 0,2 Gew. % bis 2 Gew.-% mindestens eines Korrosionsinhibitors umfasst.

10. Verfahren gemäß einem der Ansprüche 1 bis 9, **dadurch gekennzeichnet, dass** es sich bei dem mit Wasser mischbaren, organischen Lösmittel um mindestens eines ausgewählt aus der Gruppe von Ethanol, n-Propanol, i-Propanol, n-Butanol, i-Butanol, Glykolen oder Glykolethern handelt.

## Claims

1. A process for dissolving deposits comprising alkaline earth metal sulfates in underground installations or installation parts for production of mineral oil and/or natural gas and/or water from underground formations, by injecting an aqueous formulation for dissolution of the deposits into the underground installations and allowing it to act on the deposits, wherein the aqueous formulation comprises at least
(I) 15% by weight to 98.98% by weight of water,
(II) 1% by weight to 75% by weight of methanesulfonic acid,
(III) 0.01% by weight to 5% by weight of at least one water-miscible organic solvent, and
(IV) 0.01% by weight to 5% by weight of at least one corrosion inhibitor,
where the pH of the formulation used is ≤ 2.5 and the sum of components (I), (II), (III) and (IV) is at least 80% by weight based on the sum of all constituents.

2. The process according to claim 1, wherein the deposits comprise calcium sulfate, strontium sulfate and/or barium sulfate.

3. The process according to claim 1, wherein the deposits are deposits comprising strontium sulfate and/or barium sulfate.

4. The process according to any of claims 1 to 3, wherein the underground formation comprises formation water with ions dissolved therein, selected from the group of Mg²⁺, Ca²⁺, Sr²⁺ and Ba²⁺, and the installations or installation parts are in contact with the formation water during the execution of the process.

5. The process according to any of claims 1 to 4, wherein the installation is a well and/or the adjoining reservoir rock.

6. The process according to claim 5, wherein the well is not shut off from the formation during the execution of the process.

7. The process according to claim 6, wherein the flow of formation water into the well is prevented by applying a pressure equal to or greater than the pressure of the formation water.

8. The process according to any of claims 1 to 7, wherein the aqueous formulation comprises at least
(I) 44% by weight to 94.8% by weight of water,
(II) 5% by weight to 50% by weight of methanesulfonic acid,
(III) 0.1% by weight to 3% by weight of at least one water-miscible organic solvent, and
(IV) 0.01% by weight to 3% by weight of at least one corrosion inhibitor.

9. The process according to any of claims 1 to 7, wherein the aqueous formulation comprises at least
(I) 66% by weight to 83.6% by weight of water,
(II) 16% by weight to 30% by weight of methanesulfonic acid,
(III) 0.2% by weight to 2% by weight of at least one water-miscible organic solvent, and
(IV) 0.2% by weight to 2% by weight of at least one corrosion inhibitor.

10. The process according to any of claims 1 to 9, wherein the water-miscible organic solvent is at least one selected from the group of ethanol, n-propanol, i-propanol, n-butanol, i-butanol, glycols and glycol ethers.

## Revendications

1. Procédé de dissolution de dépôts comprenant des sulfates de métaux alcalins dans des unités ou des parties d'unités souterraines pour l'extraction de pétrole et/ou de gaz naturel et/ou d'eau de formations souterraines, selon lequel une formulation aqueuse pour la dissolution des dépôts est injectée dans les unités souterraines et laissée agir sur les dépôts, **caractérisé en ce que** la formulation aqueuse comprend au moins
(I) 15 % en poids à 98,98 % en poids d'eau,
(II) 1 % en poids à 75 % en poids d'acide méthanesulfonique,
(III) 0,01 % en poids à 5 % en poids d'au moins un solvant organique miscible avec l'eau, ainsi que
(IV) 0,01 % en poids à 5 % en poids d'au moins un inhibiteur de corrosion,
le pH de la formulation utilisée étant ≤ 2,5 et la somme des composants (I), (II), (III) et (IV) étant d'au moins 80 % en poids, par rapport à la somme de tous les constituants.

2. Procédé selon la revendication 1, **caractérisé en ce que** les dépôts comprennent du sulfate de calcium, de strontium et/ou de baryum.

3. Procédé selon la revendication 1, **caractérisé en ce que** les dépôts consistent en des dépôts comprenant du sulfate de strontium et/ou de baryum.

4. Procédé selon l'une quelconque des revendications 1 à 3, **caractérisé en ce que** la formation souterraine comprend une eau de formation dans laquelle sont dissous des ions choisis dans le groupe constitué par Mg²⁺, Ca²⁺, Sr²⁺ et Ba²⁺, et les unités ou les parties d'unités sont en contact avec l'eau de formation pendant la réalisation du procédé.

5. Procédé selon l'une quelconque des revendications 1 à 4, **caractérisé en ce que** l'unité consiste en un trou de forage et/ou la roche réservoir adjacente.

6. Procédé selon la revendication 5, **caractérisé en ce que** le trou de forage n'est pas bloqué par rapport à la formation pendant la réalisation du procédé.

7. Procédé selon la revendication 6, **caractérisé en ce que** l'écoulement d'eau de formation dans le trou de forage est empêché par application d'une pression, qui est supérieure ou égale à la pression de l'eau de formation.

8. Procédé selon l'une quelconque des revendications 1 à 7, **caractérisé en ce que** la formulation aqueuse comprend au moins
(I) 44 % en poids à 94,8 % en poids d'eau,
(II) 5 % en poids à 50 % en poids d'acide méthanesulfonique,
(III) 0,1 % en poids à 3 % en poids d'au moins un solvant organique miscible avec l'eau, ainsi que
(IV) 0,01 % en poids à 3 % en poids d'au moins un inhibiteur de corrosion.

9. Procédé selon l'une quelconque des revendications 1 à 7, **caractérisé en ce que** la formulation aqueuse comprend au moins
(I) 66 % en poids à 83,6 % en poids d'eau,
(II) 16 % en poids à 30 % en poids d'acide méthanesulfonique,
(III) 0,2 % en poids à 2 % en poids d'au moins un solvant organique miscible avec l'eau, ainsi que
(IV) 0,2 % en poids à 2 % en poids d'au moins un inhibiteur de corrosion.

10. Procédé selon l'une quelconque des revendications 1 à 9, **caractérisé en ce que** le solvant organique miscible avec l'eau consiste en au moins un solvant choisi dans le groupe constitué par l'éthanol, le n-propanol, l'i-propanol, le n-butanol, l'i-butanol, les glycols ou les éthers de glycol.
